# EUROPÄISCHE PATENTSCHRIFT

(11) **EP 1 226 928 B1**
(45) Veröffentlichungstag und Bekanntmachung des Hinweises auf die Patenterteilung: **06.07.2005**
(21) Anmeldenummer: 02003527.5
(22) Anmeldetag: 28.01.1999
(51) Int. Cl.: B30B 11/26, B27N 3/28, B30B 15/30

(54) **Verfahren und Vorrichtung zum Strangpressen von hohlen Strängen aus pflanzlichen Kleinteilen**
Method and apparatus for extruding hollow bars from small plant parts
Procédé et dispositif d'extrusion de barres creuses à partir de petits éléments végétaux

(30) Priorität: 04.02.1998 DE 29801829 U
(43) Veröffentlichungstag der Anmeldung: 31.07.2002
(62) Teilanmeldung aus: 99903688.2
(73) Patentinhaber: Anton Heggenstaller AG, 86556 Kühbach-Unterbernbach (DE)
(72) Erfinder: Jungbauer Rudolf, 86556 Unterbernbach (DE); Loderer Josef, 86529 Schrobenhausen (DE)
(74) Vertreter: Ernicke, Hans-Dieter, Dipl.-Ing.

(56) Entgegenhaltungen:
- EP-A- 0 218 476
- WO-A-86/05140
- DE-A- 2 810 070
- DE-A- 4 214 111
- DE-U- 8 906 494
- GB-A- 565 031

## Beschreibung

Die Erfindung bezieht sich auf ein Verfahren zum Strangpressen von hohlen Strängen aus pflanzlichen, insbesondere hölzernen Kleinteilen mit einer horizontal wirkenden Kolbenstrangpresse, bei der ein Zuführschacht mit seinem unteren Ende in einen Füll- und Pressraum mundet und durch einen hin- und herbeweglichen, eine Durchlassöffnung aufweisenden Schließschieber verschließbar ist, wobei der Strangpresskolben auf mindestens einem, den Füll- und Pressraum in Strangpressrichtung durchsetzenden Dorn geführt und eine Anordnung zur Verdichtung der unterhalb des Dornes befindlichen Kleinteile vorgesehen ist, sowie auf eine Strangpresse zur Durchführung des Verfahrens.

Eine Strangpresse mit den vorstehenden Merkmalen ist durch die DE-A-28 10 070 sowie die EU-0 084 640 A1 bekannt.

Das Problem der bekannten Strangpressen dieser Art besteht darin, dass der Füll- und Pressraum nicht gleichmäßig mit den pflanzlichen Kleinteilen gefüllt wird, wodurch sich nach dem Strangpresshub Bereiche unterschiedlicher Dichte im fertigen Strang ergeben. Bedingt ist diese ungleichmäßige Befüllung durch die Anwesenheit eines Dornes bzw. Heizrohres, welches das Zentrum des Full- und Pressraumes in Strangpressrichtung durchsetzt. Das im freien Fall aus dem Zuführschacht herangeführte pflanzliche Material muß diesem Dorn bzw. Heizrohr ausweichen und kann dann nicht mehr den Bereich unterhalb des Dornes bzw. Heizrohres genügend ausfüllen.

Mit der EU-0 084 640 A1 wird zwar beschrieben, in einer Ebene unterhalb des prismatischen Dornes ein Stopfschieberpaar gegenlaufig hin- und herzubewegen, wodurch allerdings nicht das Volumen des Füll- und Pressraumes zur Aufnahme einer größeren Füllgutmenge vergrößert wird.

Der Erfindung liegt hingegen die Aufgabe zugrunde, die Befüllung des Füll- und Pressraumes mit den pflanzlichen Kleinteilen zu verbessern, die Bereiche unterschiedlicher Dichte im Strang möglichst zu vermeiden und die Leistung der Strangpresse insgesamt zu steigern.

Ausgehend von der eingangs erwähnten vorbekannten Strangpresse wird mit der Erfindung angestrebt, die pflanzlichen Kleinteile beim Befüllen des Füll- und Pressraumes gezielt in Richtung des unter einem Heizrohr befindlichen Raumbereiches zu fördern.

Das erfindungsgemäße Verfahren besteht darin, dass der Full- und Pressraum vor Beginn des Strangpresshubs durch zwei horizontal quer zur Strangpressachse taktweise und gleichzeitig voneinander weg- und aufeinander zubewegbare Formwände derart erweitert wird, dass das Füllgut leichter unter den als Heizrohr ausgebildeten Dorn fließen kann.

Eine geeignete Vorrichtung zur Durchführung dieses Verfahrens ist dadurch gekennzeichnet, dass der Füll- und Pressraum zwei horizontal quer zur Strangpressachse taktweise und gleichzeitig voneinander weg- und aufeinander zubewegbare Formwände aufweist, die beim Einfüllen des Füllgutes gegenüber der vorderen und hinteren Schachtwand zurückversetzt sind.

Durch den wiederholt hin- und herbewegbaren Schließschieber wird das Füllgut in den durch die zurückversetzte Formwand frei werdenden Raum gefördert.

Durch die rückläufige Bewegung der Formwände in ihre Ausgangsstellung wird nun erreicht, dass das in den Füll- und Pressraum eingefüllte Material quer zur Strangpressachse zusammengeschoben wird, wobei eine gleichmäßigere Dichte unterhalb des Heizrohres erzielbar ist. Diese Bewegung der Formwände hat außerdem zur Folge, dass beim eigentlichen Strangpresshub der Vorschub des Stranges beim Verlassen des Aushärtekanals im Verhältnis zum Hub des Strangpresskolbens ungleich größer wird als bei herkömmlichen Strangpressen, wodurch sich eine erhebliche Leistungssteigerung der Strangpresse ergibt.

Es ist zwar durch die US-A-2 717 420 bekannt, sowohl die seitlichen Formwände als auch die Bodenplatte eines Füll- und Pressraumes einer Strangpresse versetzbar auszubilden, wodurch man eine Vorpressung des zu verdichtenden Gemenges von Kleinteilen erreichen will. Diese vorbekannte Strangpresse weist jedoch kein den Full- und Pressraum in Strangpressrichtung durchsetzendes Heizrohr auf, was zunächst den Nachteil mit sich bringt, dass der zu bildende Strang zwar an seiner Außenfläche, nicht aber in seinem Kern ausreichend beheizt und getrocknet wird. Wurde man jedoch ein solches Heizrohr im Füll- und Pressraum anordnen, dann wäre die vorbekannte Strangpresse nicht funktionsfähig. Dies hängt damit zusammen, dass die Bodenplatte des Füll- und Pressraumes anhebbar ausgebildet ist, nachdem die seitlichen Formwände gegeneinander versetzt worden sind. Die Folge davon ist unweigerlich, dass ein im Füll- und Pressraum befindliches Heizrohr durch den einseitig von unten wirkenden Druck der Bodenplatte aus seiner zentrischen Lage verschoben wird, was wiederum zur Folge hat, dass der Strangpresskolben nicht mehr einwandfrei geführt ist und die Strangpresse innerhalb kurzer Zeit blockieren muß.

Beim Gegenstand der Erfindung ist hingegen die Bodenplatte des Füll- und Pressraumes starr ausgebildet und nur die seitlichen Formwände sind gegeneinander zeitgleich versetzbar. Damit hebt sich der durch die seitlichen Formwände ausgeubte Pressdruck im Bereich des Heizrohres gegeneinander auf, was zur Lagestabilisierung des Heizrohres führt.

Die US-A-2 717 420 offenbart daher keine Lehre zur Lösung der mit der Erfindung gestellten Aufgabe.

Im Rahmen von Ausgestaltungen der Erfindung werden weitere Vorzüge erreicht. So ist beispielsweise der Hub der einzelnen seitlich versetzbaren Formwand beim Gegenstand der Erfindung so dimensioniert, dass er mindestens 30% der Breite des zu pressenden Stranges, vorzugsweise etwa 50%, entspricht. Das Maß der seitlichen Vorpressung des in den Füll- und Pressraum eingeführten Gemenges ist demnach wesentlich größer als beim Stand der Technik gemäß US-A-2 717 420, wo der seitliche Hub der einzelnen Formwand etwa nur 1/7 der Breite eines Stranges entspricht. Infolgedessen wird bei jedem Strangpresshub der erfindungsgemäßen Strangpresse eine größere Länge des Stranges voranbewegt und demgemäß die Leistung der Strangpresse erheblich gesteigert.

Der Hub der seitlichen Formwand wird in der Regel durch hydraulische oder pneumatische Huberzeuger veranlasst. Diese können im Sinne der Erfindung auf stufenlose oder stufenweise Hube eingestellt werden, was besonders deshalb zweckmäßig ist, um sich an unterschiedliche Beschaffenheiten des zu verpressenden Gemenges anpassen und die Leistung der Strangpresse verändern zu können.

In einer Ausgestaltung der Erfindung empfiehlt es sich, den unteren Rand der einzelnen Formwand auf der ortsfesten Bodenplatte des Füll- und Pressraumes zu fuhren. Auf diese Weise wird das in den Füll- und Pressraum eingebrachte Gemenge gleichmäßig verschoben. In ähnlicher Weise empfiehlt es sich, den oberen Rand der einzelnen Formwand an der Unterfläche des Schließschiebers in dessen Schließstellung zu führen.

Diese Maßnahme setzt voraus, dass der Schließschieber in die Schließstellung gebracht worden ist, bevor der Hub der seitlichen Formwand beginnt.

Diese und weitere Merkmale sind in der Zeichnung schematisch und beispielsweise dargestellt. Es zeigen:
- Figur 1:: einen Querschnitt durch einen Füll- und Pressraum einer Strangpresse in zurückversetzter Lage der seitlichen Formwände und
- Figur 2:: einen Querschnitt durch den Füll- und Pressraum einer Strangpresse gemäß Figur 1 in geschlossener Stellung des Schließschiebers und der Formwände,

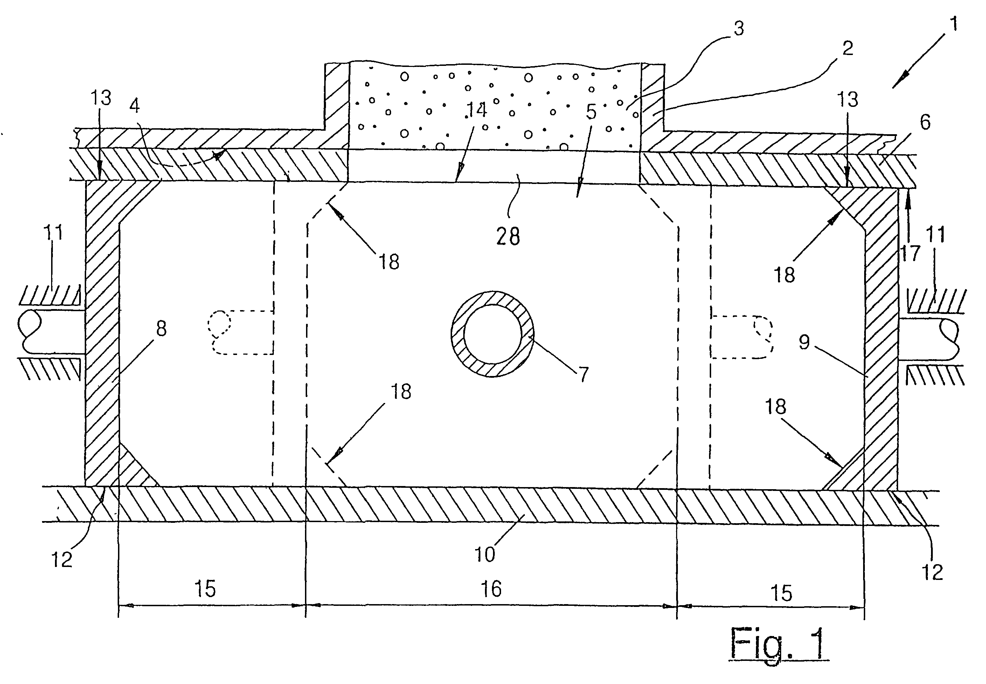

Das Ausführungsbeispiel der Figur 1 zeigt lediglich den Querschnitt durch einen Füll- und Pressraum (5) einer Strangpresse (1), wie er durch die DE-A-28 10 070 bekannt ist. Das zu verpressende Kleinteilgemenge (3) befindet sich in einem aufrechten Zuführschacht (2), dessen unteres Ende (4) durch einen Schließschieber (6) verschließbar ist, der im Beispiel der Figur 1 in geöffneter Stellung dargestellt ist. Dieser Schließschieber (6) weist eine Durchlassöffnung (28) auf, deren lichte Weite etwa dem Querschnitt der Einfüllöffnung (14) des Füll- und Pressraumes (5) entspricht. Wenn man den Schließschieber (6) wie beim Stand der Technik (DE-A 28 10 070) wiederholt hin- und herbewegt, erfolgt eine bessere Verteilung des Füllgutes im Füll- und Pressraum (5).

Es versteht sich von selbst, dass das Kleinteilgemenge (3) mit Bindemitteln vermengt und aus pflanzlichen, insbesondere hölzernen Kleinteilen bestehen kann, wobei die Größe und Art der Kleinteile sowie deren Beschaffenheit im Rahmen des Standes der Technik beliebig variierbar ist.

Der Füll- und Pressraum (5) der Strangpresse (1) wird zentrisch durch ein in der Strangpressachse sich erstreckendes Heizrohr (7) durchsetzt, welches die Aufgabe hat, den zu bildenden Strang von innen her aufzuwärmen und auszuhärten. Demgemäß ist der in Figur 1 nicht dargestellte Strangpresskolben auf diesem Heizrohr (7) geführt. Falls der zu bildende Strang breiter als in Figur 1 dargestellt ist, kann es sich empfehlen, mehrere Heizrohre (7) im Abstand nebeneinander anzuordnen und den Strangpresskolben entsprechend auszubilden.

Der Füll- und Pressraum (5) wird nach unten von einer Bodenplatte (10) und nach beiden Seiten von seitlichen Formwänden (8,9) begrenzt, die längs horizontaler Führungen (11) seitlich versetzbar ausgebildet sind. In Figur 1 befinden sich die Formwände (8,9) in zurückversetzter Lage. Die Einfüllöffnung (14) des Füll- und Pressraumes (5) ist demgemäß kleiner als die lichte Weite des zwischen den zurückversetzten Formwänden (8,9) entstehenden Hohlraumes. Um dennoch diesen erweiterten Hohlraum mit dem Kleinteilgemenge (3) weitgehend ausfüllen zu können, wird der Schließschieber (6) wiederholt hin- und herbewegt.

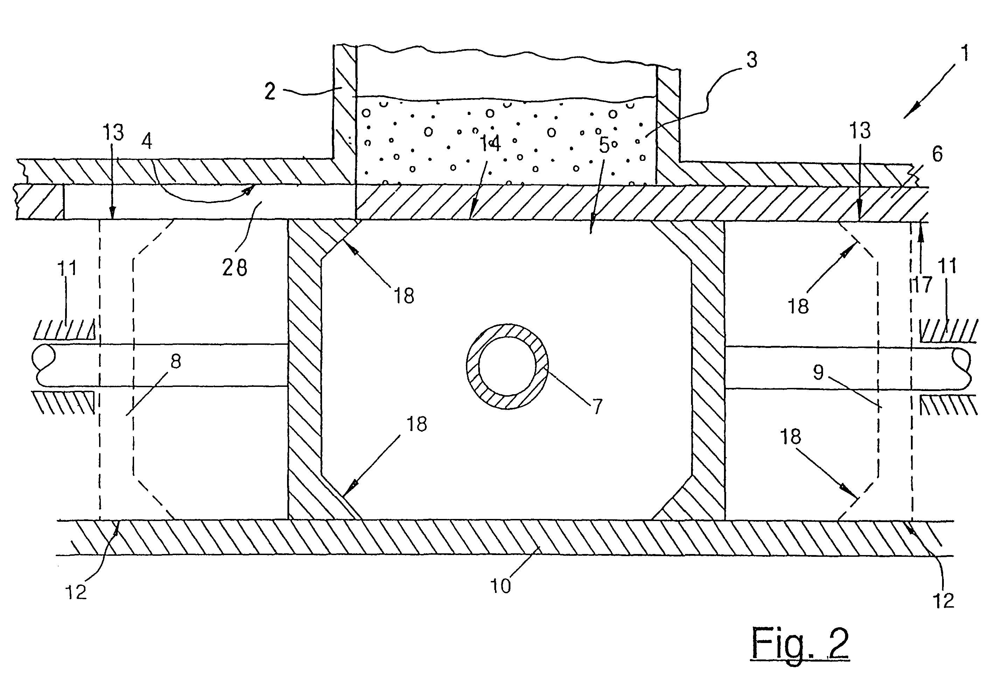

Nach Beendigung des Füllvorganges wird die Einfüllöffnung (14) dadurch geschlossen, dass der Schließschieber (6) aus der in Figur 1 gezeigten Stellung in die in Figur 2 gezeigte Stellung gebracht wird. Damit bildet die Unterfläche (17) des Schließschiebers (6) eine Führung fur die oberen Ränder (13) der Formwände (8,9). Die unteren Ränder (12) der Formwände (8,9) sind auf der Grundplatte (10) geführt.

Die seitlichen Formwände (8,9) werden aus der in Figur 1 erkenntlichen Grundstellung in die gestrichelt dargestellte Stellung bewegt und schieben damit das im Füll- und Pressraum befindliche Kleinteilgemenge (3) in Richtung zum Heizrohr (7). Hierbei ist wichtig, dass die Bewegung der Formwände (8,9) gleichzeitig erfolgt, damit eine Verformung des Heizrohres (7) vermieden wird.

Die seitlichen Formwände (8,9) besitzen an ihren oberen und unteren Rändern Abschrägungen (18), die gegeneinander gerichtet sind. Diese Abschrägungen (18) bilden am fertigen Strang schräge Flächen, wodurch eine Kantenabnutzung reduziert wird.

Im Beispiel der Figur 1 ist gezeigt, dass der einzelne Hub (15) der einzelnen Formwand (8) bzw. (9) etwa der halben Breite (16) des zu bildenden Stranges entspricht. Dieses Hub-Breiten-Verhältnis kann natürlich in nicht unerheblichen Umfang über- bzw unterschritten werden. Jedenfalls ist dieses Verhältnis wesentlich anders als beim Stand der Technik gemäß US-A-2 717 420, wo der Hub der einzelnen seitlichen Formwand etwa nur 1/7 der Breite des zu bildenden Stranges entspricht.

Die Formwände (8) beziehungsweise (9) werden durch nicht dargestellte hydraulisch oder pneumatisch betätigte Hubmotoren bewegt. Deren Hub kann nach der Erfindung stufenlos oder stufenweise verstellt werden, um sich der Beschaffenheit-des zu verpressenden Gemenges oder / und der geforderten Leistung der Strangpresse anzupassen.

Wie bereits eingangs vermerkt, besteht die Wirkung des gegenüber dem Stand der Technik wesentlich vergrößerten Hubes der seitlichen Formwände (8,9) darin, nicht nur eine Vorpressung des in den Füll- und Pressraum (5) eingebrachten Kleinteilgemenges (3) zu erreichen, sondern auch eine gleichmäßigere Verdichtung des Gemenges im zu bildenden fertigen Strang zu bewirken. Obendrein wird durch die erfindungsgemäße Maßnahme erreicht, dass das Heizrohr (7) nicht aus seiner ursprünglichen Lage beim Vorpresshub bewegt werden kann.

Im Beispiel der Figur 2 ist gezeigt, dass der Schließschieber (6) nach Beendigung des Einfüllvorganges in seine Schließstellung gelangt ist und dass demgemäß die seitlich versetzbaren Formwände (8,9) entlang der Unterfläche (17) des Schließschiebers (6) in die Schließstellung voranbewegt worden sind. Das in den Füll- und Pressraum (5) eingebrachte Gemenge (3) hat demgemäß eine Vorverdichtung um ca. 50% erfahren, wodurch das Verhältnis von Strangpresshub zur ausgestoßenen Lange des Stranges pro Hub wesentlich günstiger geworden ist.

### STÜCKLISTE

- 1: Strangpresse
- 2: Zuführschacht
- 3: Kleinteilgemenge
- 4: unteres Ende des Schachtes
- 5: Füll- und Pressraum
- 6: Schließschieber
- 7: Heizrohr
- 8: Formwand
- 9: Formwand
- 10: Bodenplatte
- 11: Führung
- 12: unterer Rand der Formwand
- 13: oberer Rand der Formwand
- 14: Einfüllöffnung
- 15: Hub der Formwand
- 16: Breite des Stranges
- 17: Unterfläche des Schiebers
- 18: Abschrägung

## Patentansprüche

1. Verfahren zum Strangpressen von hohlen Strängen aus pflanzlichen, insbesondere hölzernen Kleinteilen (3) mit einer horizontal wirkenden Kolbenstrangpresse, bei der ein Zuführschacht (2) mit seinem unteren Ende (4) in einen Full- und Pressraum (5) mundet und durch einen hin- und herbeweglichen eine Durchlassöffnung aufweisenden Schließschieber (6) verschließbar ist, wobei der Strangpresskolben auf mindestens einem, den Füll- und Pressraum (5) in Strangpressrichtung durchsetzenden Dorn geführt und eine Anordnung zur Verdichtung der unterhalb des Dornes befindlichen Kleinteile vorgesehen ist, **dadurch**
**gekennzeichnet, dass** der Füll- und Pressraum (5) vor Beginn des Strangpresshubs durch zwei horizontal quer zur Strangpressachse taktweise und gleichzeitig voneinander weg und aufeinander zu bewegbare Formwände (8,9) derart erweitert wird, dass das Füllgut leichter unter den als Heizrohr (7) ausgebildeten Dorn fließen kann.

2. Strangpresse zur Durchführung des Verfahrens nach Anspruch 1, bestehend aus einem Zuführschacht (2), dessen unteres Ende (4) in einen Füll- und Pressraum (5) mündet und mit einem hin- und herbeweglichen, eine Durchlassöffnung (28) aufweisenden Schließschieber (6) verschließbar ist, wobei der Strangpresskolben auf mindestens einem, den Full- und Pressraum (5) in Strangpressrichtung durchsetzenden Dorn geführt, **dadurch gekennzeichnet, dass** der Füll- und Pressraum (5) zwei horizontal quer zur Strangpressachse taktweise und gleichzeitig voneinander weg und aufeinander zu bewegbare Formwände (8,9) aufweist, die beim Einfüllen des Füllgutes gegenüber der vorderen und hinteren Schachtwand zurückversetzt sind.

3. Strangpresse nach Anspruch 2, **dadurch gekennzeichnet, dass** der Hub (15) der einzelnen Formwand (8,9) mindestens 30% der Breite (16) des zu pressenden Stranges, vorzugsweise etwa 50% entspricht.

4. Strangpresse nach Anspruch 2 oder 3, **dadurch gekennzeichnet, dass** der Hub (15) der einzelnen Formwand (8,9) stufenlos oder stufenweise veranderbar ist.

5. Strangpresse nach Anspruch 2, **dadurch gekennzeichnet, dass** der untere Rand (12) der einzelnen Formwand (8,9) auf der ortsfesten Bodenplatte (10) des Füll- und Pressraumes (5) geführt ist.

6. Strangpresse nach Anspruch 2, **dadurch gekennzeichnet, dass** der obere Rand (13) der einzelnen Formwand (8,9) auf der Unterfläche (17) des Schließschiebers (6) in dessen Schließstellung geführt ist.

## Claims

1. Method for extruding hollow bars from small plant parts (3), in particular of wood, with a horizontally acting ram extruder, in which a feeding chute (2) opens out with its lower end (4) into a filling and pressing chamber (5) and can be closed by a closing slider (6) which can move back and forth and has a through-opening, the extruder ram being guided on at least one pin passing through the filling and pressing chamber (5) in the direction of extrusion, and an arrangement for sealing the small parts that are located underneath the pin being provided, **characterized in that**, before the beginning of the extrusion stroke, the filling and pressing chamber (5) is widened by two mould walls (8, 9) which can move horizontally, transversely to the extruder axis, away from each other and towards each other cyclically and simultaneously, in such a way that the filling material can flow more easily under the pin formed as a heating pipe (7).

2. Extruder for carrying out the method according to Claim 1, comprising a feeding chute (2), the lower end (4) of which opens out into a filling and pressing chamber (5) and can be closed by a closing slider (6) which can move back and forth and has a through-opening (28), the extruder ram being guided on at least one pin passing through the filling and pressing chamber (5) in the direction of extrusion, **characterized in that** the filling and pressing chamber (5) has two mould walls (8, 9) which can move horizontally, transversely to the extruder axis, away from each other and towards each other cyclically and simultaneously, and are set back from the front and rear walls of the chute during filling with the filling material.

3. Extruder according to Claim 2, **characterized in that** the stroke (15) of the individual mould wall (8, 9) corresponds to at least 30% of the width (16) of the bar to be extruded, preferably approximately 50%.

4. Extruder according to Claim 2 or 3, **characterized in that** the stroke (15) of the individual mould wall (8, 9) is variable steplessly or in steps.

5. Extruder according to Claim 2, **characterized in that** the lower edge (12) of the individual mould wall (8, 9) is guided on the fixed base plate (10) of the filling and pressing chamber (5).

6. Extruder according to Claim 2, **characterized in that** the upper edge (13) of the individual mould wall (8, 9) is guided on the lower surface (17) of the closing slider (6) in its closing position.

## Revendications

1. Procédé d'extrusion de barres creuses à partir de petits éléments végétaux et en particulier à partir de petits éléments (3) de bois, au moyen d'une extrudeuse à piston qui travaille à l'horizontale et qui comprend un espace (5) de remplissage et de compression dans lequel débouche l'extrémité inférieure (4) d'une trémie d'amenée (2) qui peut être fermée par un coulisseau de fermeture (6) qui présente une ouverture de passage et qui peut être déplacé en va-et-vient, le piston de l'extrudeuse étant guidé par au moins un tourillon qui traverse l'espace (5) de remplissage et de compression dans la direction d'extrusion et un dispositif de compression des petits éléments qui se trouvent sous le tourillon étant prévu, **caractérisé en ce qu'**en amont de la course de l'extrudeuse, l'espace (5) de remplissage et de compression est agrandi au moyen de deux parois (8, 9) de moule qui peuvent être éloignées ou rapprochées l'une de l'autre de manière simultanée et cadencée, horizontalement et transversalement par rapport à l'axe d'extrusion, de telle manière que la matière de remplissage peut s'écouler plus facilement en dessous du tourillon configuré comme tube chauffant (7).

2. Extrudeuse pour la mise en oeuvre du procédé selon la revendication 1, constituée d'une trémie d'amenée (2) dont l'extrémité inférieure (4) débouche dans un espace de remplissage et de compression (5) et peut être fermée au moyen d'un coulisseau de fermeture (6) qui peut être déplacé en va-et-vient et qui présente une ouverture de passage (28), le piston d'extrusion étant guidé par au moins un tourillon qui traverse l'espace (5) de remplissage et de compression dans la direction d'extrusion, **caractérisé en ce que** l'espace (5) de remplissage et de compression présente deux parois (8, 9) de moule qui peuvent être rapprochées et éloignées l'une de l'autre de manière simultanée et cadencée, horizontalement et transversalement par rapport à l'axe d'extrusion et qui, lors du remplissage par la matière de remplissage, sont placées en retrait par rapport à la paroi antérieure et à la paroi postérieure de la trémie.

3. Extrudeuse selon la revendication 2, **caractérisée en ce que** le déplacement (15) de chacune des parois (8, 9) de moule correspond à au moins 30 % et de préférence à environ 50 % de la largeur (16) de la barre à comprimer.

4. Extrudeuse selon les revendications 2 ou 3, **caractérisée en ce que** le déplacement (15) de chacune des parois (8, 9) de moule peut varier de manière progressive ou par paliers.

5. Extrudeuse selon la revendication 2, **caractérisée en ce que** le bord inférieur (12) de chacune des parois (8, 9) de moule est guidé sur la plaque (10) fixe de fond de l'espace (5) de remplissage et de compression.

6. Extrudeuse selon la revendication 2, **caractérisée en ce que** le bord supérieur (13) de chacune des parois (8, 9) de moule est guidé sur la surface inférieure (17) du coulisseau de fermeture (6) lorsque celui-ci est fermé.
